# EUROPÄISCHE PATENTSCHRIFT

(11) **EP 1 703 798 B1**
(45) Veröffentlichungstag und Bekanntmachung des Hinweises auf die Patenterteilung: **15.01.2014**
(21) Anmeldenummer: 04820798.9
(22) Anmeldetag: 11.11.2004
(51) Int. Cl.: A22C 13/00

(54) **PROTEINHALTIGE, SCHLAUCHFÖRMIGE NAHRUNGSMITTELHÜLLE MIT INNENVERSTÄRKUNG**
INTERNALLY REINFORCED TUBULAR-SHAPED FOOD COVERING CONTAINING PROTEIN
ENVELOPPE ALIMENTAIRE TUBULAIRE CONTENANT DES PROTÉINES, PRÉSENTANT UN RENFORT INTÉRIEUR

(30) Priorität: 19.12.2003 DE 10360610
(43) Veröffentlichungstag der Anmeldung: 27.09.2006
(73) Patentinhaber: Kalle GmbH, 65203 Wiesbaden (DE)
(72) Erfinder: FÖGLER, Jens, 65232 Taunusstein (DE); GORD, Herbert, 55218 Ingelheim (DE); SEELGEN, Michael, 65510 Idstein (DE)
(74) Vertreter: Plate, Jürgen
(86) Internationale Anmeldenummer: PCT/EP2004/012769
(87) Internationale Veröffentlichungsnummer: WO 2005/063027

(56) Entgegenhaltungen:
- EP-A- 0 286 026
- EP-A- 0 914 772
- DE-A1- 4 418 368
- GB-A- 1 544 155
- US-A- 4 142 013
- US-A1- 2002 064 580

## Beschreibung

Die Erfindung betrifft eine schlauchförmige Nahrungsmittelhülle mit Innenverstärkung sowie ihre Verwendung als künstliche Wursthülle.

Schlauchförmige Nahrungsmittelhüllen auf Basis von regenerierter Cellulose mit einer Innenverstärkung aus einem Faserpapier, insbesondere aus Hanffaser-papier, sind seit langem bekannt (s. G. Effenberger, Wursthüllen - Kunstdarm, 2. Aufl. [1991] Holzmann Buchverlag, Bad Wörishofen, S. 23/24). Sie werden allgemein als künstliche Wursthüllen verwendet. Hergestellt werden diese Hüllen nach dem Viskoseverfahren, das viele Prozeßstufen beinhaltet, apparativ sehr aufwendig ist und eine intensive Reinigung von Abluft und Abwasser erfordert.

Als Alternative wurde das Aminoxid-Verfahren entwickelt. Darin wird die Cellulose nicht mehr chemisch derivatisiert (wie im Viskoseverfahren), sondern rein physikalisch gelöst in einem wäßrigen Aminoxid, insbesondere in N-Methyl-morpholin-N-Oxid(NMMO)-Monohydrat. Die in dem wäßrigen Aminoxid gelöste Cellulose kann, wie in dem Viskoseverfahren, auf ein zu einem Schlauch geformtes, bahnförmiges Fasermaterial aufgebracht werden. Der so beschichtete Schlauch wird dann durch ein Bad mit verdünntem, wäßrigen Aminoxid geführt. In dem Bad wird die Cellulose ausgefällt. Auf diese Weise wird eine nahtlose Hülle erhalten.

Hüllen mit einer Längsnaht lassen sich aus einem entsprechenden Flachmaterial durch allgemein bekannte Verfahren, wie Kleben, Siegeln, Nähen oder Ähnlichem herstellen. Dabei kann das Flachmaterial seinerseits durch Aufschneiden eines großkalibrigen Schlauchs in Längsrichtung und Zerteilen des aufgeschnittenen Schlauchs in parallel verlaufende Bahnen erhalten werden. Auf diese Weise hergestellte Hüllen weisen eine besonders gleichmäßige Dehnung über den gesamten Umfang auf.

Bekannt sind auch künstliche Wursthüllen aus Faser-Flächenmaterial, beispielsweise einem Baumwoll-Rundgestrick, das auf der Außenseite mit Kollagen imprägniert ist (DE-C 33 33 387).

Aus der US 4,142,013 (= DE 24 47757) ist zudem ein nach dem Viskose-Verfahren hergestellter Cellulose-Faserdarm bekannt, auf dessen Innenseite sich - auf der Celulosehydratschicht - eine Beschichtung aus einem chemisch modifizierten Protein befindet. Durch chemische Reaktion zwischen den Hydroxygruppen der Cellulosehydratschicht und N-Methylol-Gruppen des modifizierten Proteins wird eine feste Verbindung der Proteinschicht mit der Hülle erreicht. Durch die proteinhaltige Beschichtung auf der Innenseite wird eine verbesserte Haftung der Hülle an einem darin befindlichen Wurstbrät erreicht.

In der JP-A 51-079748 sind Laminate offenbart aus einem porösen, bahnförmigen Trägermaterial, beispielsweise aus Papier, Textilmaterial oder einer porösen Folie und einer Folie aus wasserlöslichen Polysacchariden, Proteinen und/oder synthetischen Harzen. Als geeignete Polysaccharide sind insbesondere Mannan, Chitin, Alginsäure und Pectin genannt. Als Beispiele für Proteine sind Collagen, Gelatine und Casein erwähnt, als Beispiele für synthetische Harze Polyvinylalkohol, Polyacrylsäure, Polyacrylamid und Polyvinylpyrrolidon. Die Laminate werden zu Nahrungsmittelhüllen, darunter auch Wursthüllen, verarbeitet. Die Hüllen zeigen eine verbesserte Räucherbarkeit, eine hohe Transparenz und eine zufriedenstellende Festigkeit. Laminate haben aber oft den Nachteil, daß die Haftung zwischen Trägermaterial und Folie nicht ausreicht.

Schlauchförmige Hüllen, die aus einem laminierten oder beschichteten Flachmaterial geformt werden, weisen im Bereich der Naht die doppelte Wandstärke auf. Übereinander liegende Nahtstellen bilden dann beim Aufrollen Dickstellen (Wulste). Beim Raffen führen die dicken Nahtbereiche zu leicht gekrümmten Raffraupen. Bei einem Bedrucken der schlauchförmigen Hülle muß zudem darauf geachtet werden, daß das Druckbild nicht in den Bereich der Naht reicht, denn dieser Bereich läßt sich nicht sauber bedrucken.

Laminierte oder beschichtete Flachmaterialien lassen sich jedoch einfacher und damit wirtschaftlicher herstellen. Diese lassen sich problemlos zu Hüllen mit Naht verarbeiten. Die Vorteile bei der Herstellung der Hüllen überwiegen die mit der Naht verbundenen Nachteile.

Es bestand daher die Aufgabe, eine Nahrungsmittelhülle zu entwickeln, die die geschilderten Nachteile nicht mehr oder nur in sehr viel geringerem Maße aufweist. Sie soll einfach, kostengünstig und umweltschonend herstellbar sein. Ihre Eigenschaften, insbesondere ihre Wasserdampf- und Sauerstoff-Barriereeigenschaften, sollen sich über einen weiten Bereich einstellen lassen, damit sich die Hülle für eine Vielzahl von verschiedenen Nahrungsmitteln verwenden läßt. Sie soll auch weniger anfällig, möglichst sogar resistent sein gegen cellulytisch wirkende Enzyme (Cellulasen), die beispielsweise von Schimmelpilzen gebildet werden. Die Hüllen sollen zudem ohne chemische Regeneration herstellbar sein, bei der Reaktionsgase und Entquellungswasser entstehen (wie das im Viskoseverfahren stets der Fall ist).

Gelöst wurden die geschilderten Aufgaben durch eine Beschichtung auf Basis von Protein, die gleichmäßig von außen und/oder innen auf ein zu einem Schlauch geformtes Fasermaterial aufgebracht wird. Eine weitere Lösung bestand darin, daß die Beschichtung auf Basis von Protein gleichmäßig auf eine oder beide Seiten eines flachen Fasermaterials aufgebracht wird.

Gegenstand der vorliegenden Erfindung ist demgemäß eine schlauchförmige Nahrungsmittelhülle mit einer flächenförmigen Einlage, dadurch gekennzeichnet, daß die Einlage ein Fasermaterial oder eine poröse Folie ist und auf mindestens einer Seite eine Beschichtung auf Basis von Proteinen aufweist, bei denen es sich um Gelatine, Kollagen oder Desamidokollagen handelt und von denen wenigstens eines filmbildend ist, wobei das Protein der Beschichtung mit einem anorganischen oder organischen Füllstoff oder Kollagenfasern mit einer Länge von 0,1 bis 4,0 cm abgemischt ist; wobei die Beschichtung auf Basis von Proteinen die flächenförmige Einlage durchdringt und wobei die keine regenerierte oder gefällte Cellulose enthält.

Die flächenförmige Einlage ist bevorzugt ein verfestigtes Vlies oder Spinnvlies, das gegebenenfalls imprägniert ist. Ein- oder beidseitig imprägniert werden kann die flächenförmige Einlage auch nach dem Aufbringen der proteinhaltigen Schicht. Dabei kann das beschichtete Flachmaterial oder die daraus geformte schlauchförmige Hülle imprägniert werden. Mit einer solchen Imprägnierung kann beispielsweise die Bräthaftung eingestellt oder die Schimmelresistenz erhöht werden. Die Imprägnierung kann auch übertragbare Farb-, Aroma-, Geruchs-und/oder Geschmackskomponenten umfassen (beispielsweise Flüssigrauch). In weiteren Ausführungsformen ist die Einlage ein Gewebe, Gewirke, Gestricke oder Gelege oder auch eine poröse Folie. Die flächenförmige Einlage kann aus Natur- und/oder Kunstfasern bestehen. Bevorzugte Materialien sind Baumwolle, Regenerat-Cellulose (Zellwolle), Seide, Polyester, Polyamid, Polyolefin (insbesondere Polypropylen), Polyvinylacetat, Polyacrylnitril, Polyvinyl-chlorid sowie die entsprechenden Copolymere. Auch Gemische verschiedener Materialen lassen sich einsetzen (z.B. Gemische aus Zellwolle und Polyester). All diese Einlagematerialien können imprägniert sein. Eine Imprägnierung kann beispielsweise erreicht werden durch einen Haftvermittler, der die Haftung der Beschichtung verbessert. Die Imprägnierungsmittel werden in einer geringen Menge verwendet, d.h. die Menge reicht in keiner Weise aus, um die Zwischenräume der flächenförmigen Einlage auszufüllen.

Unter dem Begriff "flächenförmig" sollen Materialien verstanden werden, die relativ dünn, jedoch selbsttragend sind und sich zu einem Schlauch formen lassen. Dicke und Flächengewicht sind auch abhängig von der späteren Verwendung der Hülle. Allgemein beträgt das Flächengewicht 3 bis 1.000 g/m², bevorzugt 10 bis 130 g/m², besonders bevorzugt 12 bis 75 g/m². Ist die flächenförmige Einlage ein Faserpapier, dann hat dieses bevorzugt ein Gewicht von 17 bis 29 g/m². Je nach Anforderung ist das Trägermaterial dehnbar oder praktisch nicht dehnbar. Nicht dehnbare flächenförmige Einlagen sind sinnvoll für Hüllen, bei denen es auf besonders hohe Kaliberkonstanz ankommt. Gegebenenfalls besteht die Einlage wiederum aus 2 oder mehr gleichen oder verschiedenartigen Lagen, beispielsweise einem Faserpapier, das mit einem Textilmaterial verbunden ist.

Die Einlage wird zu einem Schlauch geformt, wobei die Längskanten mehr oder weniger stark überlappen können. Je nach Kaliber der Hülle ist der Über-lappungsbereich jedoch allgemein nurwenige Millimeter breit. Als günstig hatsich ein Überlappungsbereich mit einer Breite von 1 bis 6 mm, bevorzugt von 1,5 bis 4 mm, erwiesen.

Die zu einem Schlauch geformte Einlage wird dann gleichmäßig von außen, von innen oder von beiden Seiten beschichtet, wobei die Schicht bzw. Beschichtung wenigstens zum Teil aus einem filmbildenden Protein besteht. Die Einlage kann ebenso gut ein- oder beidseitig beschichtet werden, bevor sie zu einem Schlauch weiterverarbeitet wird. "Filmbildend" bedeutet, daß das Protein eine durchgehende, zusammenhängende Beschichtung bilden kann. Besonders bevorzugte Proteine sind dabei Gelatine oder Kollagen. Gut geeignet sind auch Casein (Milcheiweiß), Sojaprotein, Gluten (Weizenprotein), Zein (Maisprotein), Ardein (Erdnußprotein), Erbsenprotein, Baumwollsamen- oder Fischprotein. Das Protein, insbesondere die Gelatine, ist bevorzugt mit einem anorganischen oder organischen Füllstoff abgemischt. Besonders geeignete anorganische Füllstoffe sind dabei Kreide, Kalksteinmehl, Calcit, gefälltes Calciumcarbonat, Magnesiumcarbonat, Bariumcarbonat, Dolomit oder/und andere Mischcarbonate. Besonders geeignete organische Füllstoffe sind feingemahlenes Cellulosepulver, Weizenkleie, native oder/und thermoplastische Stärke (TPS) bzw. Stärkederivate. Im Bereich der nicht derivatisierten Stärke ist native oder/und thermoplastifizierte Mais- oder/und Kartoffelstärke bevorzugt. Stärkederivate sind beispielsweise Stärkeester, wie Stärkeacetate, -maleate, -propionate, -butyrate, -lauroate oder/ und -oleate, Stärkexanthogenate, -phosphate, -sulfate oder/und -nitrate, Stärkeether, wie Stärkemethylether, -ethylether, -propylether, -butylether, -alkenylether, -hydroxyethylether oder/und -hydroxypropylether, gepfropfte Stärken, insbesondere mit Maleinsäure- oder Bernsteinsäureanhydrid gepfropfte Stärke oder/und oxidierte Stärken, wie Dialdehydstärke, Carboxystärke oder/und mit Persulfat abgebaute Stärke. Es können auch weitere Polysaccharide enthalten sein, insbesondere pflanzliche Pulver oder/und Fasern wie u.a. solche aus Baumwolle, Kapok, Flachs, Leinen, Hanf, Jute, Kenaf, Ramie, Sisal, Torf, Stroh, Weizen, Kartoffeln, Tomaten, Karotten, Kokos, Ananas, Äpfeln, Orangen, Fichte, Kiefer oder Kork.

Es ist jedoch hervorzuheben, daß die proteinhaltige Schicht bzw. Beschichtung keine regenerierte oder gefällte Cellulose enthält, sondern daß sie allenfalls, in untergeordneten Mengen von weniger als 5 Gew.-%, bezogen auf das Gewicht der Schicht bzw. Beschichtung, einen fein verteilten cellulosischen Füllstoff enthalten kann.

Gelatine wird durch Hydrolyse von Knochen- oder Hautprotein (in der Regel aus Rinderhaut und -knochen) gewonnen, wobei die tripel-helikale Struktur größtenteils zerstört wird. Das Molekulargewicht beträgt etwa 15.000 bis 250.000 g/mol, wobei die Molekulargewichtsverteilung einer Gauß-Kurve entspricht. Gelatine ist weitgehend wasserlöslich. Kollagenfasern sind darin allgemein nicht enthalten.

Das Protein kann auch Kollagen oder Desamidokollagen sein, das vorzugsweise mit Kollagenfasern abgemischt ist. Die Fasern haben zweckmäßig eine Länge von 0,1 bis 4,0 cm. Der Anteil der Fasern beträgt allgemein bis zu 80 Gew.-%, bevorzugt etwa 20 bis 50 Gew.-%, jeweils bezogen auf das Gesamtgewicht an Protein.

Der Anteil an Protein beträgt allgemein 2,5 bis 95 Gew.-%, bevorzugt 20 bis 80 Gew.-%, besonders bevorzugt 30 bis 75 Gew.-%, jeweils bezogen auf das Gesamtbeschichtungsgewicht der Hülle.

Neben dem Protein kann die Beschichtung weitere natürliche und/oder synthetische Polymere enthalten. Das sind insbesondere Polyacrylate, Polyvinylacetate und/oder (Co)Polymere mit Einheiten aus Vinylacetat, wobei ein mehr oder weniger großer Teil der Vinylacetat-Einheiten auch verseift sein kann. Diese Polymere können auch permanent weichmachende Eigenschaften haben. Solche auch als "primäre Weichmacher" bezeichneten Verbindungen sind beispielsweise Alginate, Polyvinylpyrrolidone, quartäre Vinylpyrrolidon-Copolymere (^{®}Gafquat), Copolymere mit Einheiten aus Vinylpyrrolidon, Maleinsäureanhydrid, Methylvinylether oder verzweigte Polysaccharide (wie Carrageenan). Der Anteil der weiteren Polymere beträgt allgemein bis zu 50 Gew.-%, bevorzugt 5 bis 40 Gew.-%, besonders bevorzugt 6 bis 25 Gew.-%, bezogen auf das Trockengewicht der Hülle.

Wenn das filmbildende Protein wasserlöslich ist, wie das beispielsweise bei der Gelatine der Fall ist, dann wird zusätzlich mindestens ein Vernetzer benötigt. Geeignete Vernetzer sind epoxidiertes Leinöl, Diketene mit langkettigen Alkylresten (allgemein mit (C₁₀-C₁₈)Alkylresten), Caramel, Tannin, Diepoxide, Citral, Aziridine, Verbindungen mit mindestens zwei Carbaldehyd-Gruppen (wie Glyoxal oder Glutardialdehyd) und/oder Polyamin-Polyamid-Epichlorhydrinharze, Acrylamide, Bis-acrylamide und Acrylmethylol sowie beliebige Mischungen davon, z.B. Acrylsäureramid-methylol und Bisacrylsäureamid-dimethylol.

In einer bevorzugten Ausführungsform weist die Hülle zwei übereinanderliegende, proteinhaltige Beschichtungen auf. So kann beispielsweise die erste Beschichtung Zwischenräume in dem flächenförmigen Einlagematerial füllen. Eine weitere kontinuierliche Beschichtung, die auch ein anderes Protein oder eine andere Mischung von Proteinen enthalten kann, wird dann in einem nachfolgenden Schritt darauf aufgebracht. Die Proteinmischungen umfassen vorzugsweise Kollagenfasern.

Die Beschichtung kann darüber hinaus Farbstoff und/oder Pigmente enthalten. Der Anteil der Farbstoffe und/oder Pigmente beträgt dabei allgemein 0,5 bis 12,0 Gew.-%, bevorzugt 1,0 bis 6,0 Gew.-%, jeweils bezogen auf das Trockengewicht der Hülle.

Gegebenenfalls enthält die Hülle zusätzlich Aroma-, Geschmacks- oder Geruchsstoffe, die auf das Brät übertragbar sein können. Zu nennen ist hier insbesondere Trocken- oder Flüssigrauch.

Um zu verhindern, daß die Hülle im flachgelegten und aufgerollten Zustand verklebt, kann sie übliche Additive in untergeordneten Mengen (d.h. maximal etwa 10 Gew.-%, bezogen auf das Trockengewicht der Hülle) enthalten. Solche Additive sind beispielsweise Aluminiumsilikate, insbesondere Kaolin, Calciumcarbonat, Siliciumdioxid, ein PVC-Pigment, Wachse oder fette Öle. Andere Additive können dazu dienen, das gewünschte Ausmaß an Bräthaftung sicherzustellen. Wenn der Proteinanteil dafür nicht ausreicht, dann ist eine übliche Innenimprägnierung vorzunehmen, wie z.B. die Präparation mit 40 % ®Aquapel um Trennwirkung zu erzielen.

Zweckmäßig enthält die erfindungsgemäße Hülle zudem noch mindestens einen sekundären Weichmacher, bevorzugt Glycerin.

Zusätzlich zu der proteinhaltigen Schicht bzw. Beschichtung kann die erfindungsgemäße Hülle noch weitere Schichten aufweisen. Diese enthalten im allgemeinen auch keine regenerierte oder gefällte Cellulose. Zusätzlich vorhanden sein können insbesondere Schichten auf Basis von Polyacrylat, Polyvinylacetat (PVA), Polyvinylpyrrolidon, Polyvinylidenchlorid (PVDC), Polyvinylchlorid (PVC), Ethylen/ Vinylalkohol-Copolymere (EVA), Ethylen/Acrylsäure-Copolymere, Polyvinylalkohol (PVOH), Synthesekautschuk, Latex, Silikon oder von beliebigen Mischungen davon. Auch die zusätzlichen Schichten können die üblichen Additive enthalten, insbesondere Farbstoffe und/oder Pigmente. Diese weiteren Schichten sind als durchgehende Schichten auf dem schlauchförmigen Trägermaterial oder auf dem Flachmaterial ausgebildet. Eine oder mehrere der weiteren Schichten können auch vor der proteinhaltigen Schicht aufgebracht werden. So kann beispielsweise auf das bahnförmige Trägermaterial zuerst eine Polyacrylatschicht und dann eine Gelatineschicht aufgebracht werden. Durch passende Wahl von Art, Anzahl und Dicke der zusätzlichen Schicht(en) läßt sich die Sauerstoff- und Wasserdampfdurchlässigkeit der erfindungsgemäßen Hülle in einem weiten Bereich einstellen, so daß sie sich für verschiedenartige Nahrungsmittel verwenden läßt.

Eine zusätzliche PVDC-Schicht verleiht der Hülle eine besonders hohe Wasser-dampf- und Sauerstoff-Barriere, verhindert so ein Austrocknen der Wurst und die Verfärbung des Brätes durch Oxidation (z.B. bei Leberwurst). Die PVDC-Schicht bildet bevorzugt die Außenschicht.

Die Dicke der Beschichtung(en) wird so gewählt, daß die Hülle beispielsweise die für Reifung der Wurst erforderliche Wasserdampf- und Sauerstoffdurchlässigkeit aufweist. Allgemein beträgt das Gewicht der Beschichtung nach dem Trocknen 10 bis 200 g/m², bevorzugt 20 bis 120 g/m², besonders bevorzugt 30 bis 100 g/m².

Die Hülle weist allgemein einen Wassergehalt von etwa 6 bis 20 Gew.-%, bevorzugt von etwa 8 bis 12 Gew.-%, auf. Die erfindungsgemäße Hülle kann dann vorbefeuchtet (auf einen Feuchteanteil von etwa 20 bis 30 Gew.-%) und in diesem Zustand an den Wursthersteller geliefert oder von diesem selbst vor dem Füllen gewässert werden. Überraschendenderweise hat sich gezeigt, daß die erfindungsgemäße Hülle auch ohne vorheriges Befeuchten oder Wässern problemlos gefüllt werden kann.

Die erfindungsgemäße Nahrungsmittelhülle weist eine Wasserdampfdurchlässigkeit (nach DIN 53 122) von 300 bis 1500 g/m²d, bevorzugt von 700 bis 1200 g/m²d. Ihre Sauerstoffdurchlässigkeit beträgt allgemein 700 bis 1500 cm³/m² d (bestimmt gemäß DIN 53 380 bei 65 % r.F.), gemessen an einem 5 cm² großen Stück der Hülle mit einem Wassergehalt von 8 bis 10 Gew.-% und einem Weichmachergehalt von etwa 15 Gew.-%.

Die Wasserdurchlässigkeit beträgt allgemein etwa 10 bis 100 l/m² d, bevorzugt etwa 12 bis 20 l/m² d bei 40 bar.

Je nach Zusammensetzung und Dicke der Beschichtung kann die Hülle auch rauchdurchlässig sein. Das Dehnverhalten der Hülle wird ebenfalls durch die Art und Dicke der Beschichtung bestimmt, daneben jedoch auch durch Art und Stärke derflächenförmigen Verstärkungs-Einlage. So kann die Dehnung variieren zwischen 0,1 und 25 %, bevorzugt zwischen 1 und 5 % (jeweils in Längs- und Querrichtung).

Verfahren und Vorrichtungen zur Herstellung der erfindungsgemäßen Hülle sind dem Fachmann an sich bekannt. Dabei wird ein bahnförmiges Trägermaterial mit einer vorbestimmten Breite zunächst zu einem Schlauch geformt, beispielsweise mit einer sogenannten Formschulter. Dabei kann der Schlauch zur Aufrecht-erhaltung seiner Form und zur Vermeidung eines Trocknungsschrumpfes mit Stützluft beaufschlagt oder mit Kaliberstützringen in seiner runden Form gehalten werden. Anschließend wird das Trägermaterial von innen und/oder von außen nahtlos mit der proteinhaltigen Masse beschichtet, beispielsweise mit Hilfe einer Ringschlitzdüse. Das Beschichtungsmaterial (wenigstens das der ersten Beschichtung) durchdringt die flächenförmige Einlage und verbindet dadurch dessen (überlappende) Längskanten fest miteinander. Im Nahtbereich des Trägermaterials ist die Hülle dann nur unwesentlich dicker als in den übrigen Bereichen.

Die Hülle kann gegebenenfalls in Längsrichtung in zwei oder mehr Bahnen geschnitten werden, die sich anschließend durch Kleben, Siegeln, Nähen oder auf eine andere dem Fachmann geläufige Art zu Schläuchen mit entsprechend kleinerem Durchmesser schließen lassen. Die dabei entstehenden Hüllen mit Längsnaht lassen sich ebenfalls als Nahrungsmittelhüllen, insbesondere als künstliche Wursthüllen einsetzen.

In einer besonderen Ausführungsform wird das bahnförmige Trägermaterial ein- oder beidseitig beschichtet, beispielsweise durch Besprühen, Rakelantrag, Walzenantrag, Antragen mit Hilfe einer Breitschlitzdüse oder nach anderen, dem Fachmann geläufigen Beschichtungsverfahren. Das beschichtete Flachmaterial wird gegebenenfalls bedruckt. Soweit erforderlich, wird das beschichtete Flachmaterial in Bahnen passender Breite geschnitten, die Bahnen werden in an sich bekannter Weise zu schlauchförmigen Hüllen geformt und die überlappenden Längskanten fixiert, beispielsweise durch Kleben, Nähen, Siegeln oder Verschweißen. Für die Klebenaht können beispielsweise Hotmelts, Reaktionskleber oder Proteine verwendet werden.

Die erfindungsgemäße Hülle läßt sich mit üblichen Füllmaschinen mit pastösen Nahrungsmittel füllen, insbesondere mit Wurstbrät. Bei der Verwendung als Wursthülle wird sie zweckmäßig in geraffter Form (als sogenannte Raffraupe) oder in Form von Einzelabschnitten eingesetzt. Die Einzelabschnitte sind dabei an einem Ende verschlossen, beispielsweise durch einen Metall- oder Kunststoff-Clip, durch Abbinden mit Garn oder durch Abnähen. Die Abschnitte werden dann einzeln auf das Füllrohr der Füllvorrichtung geschoben, mit Brät gefüllt und verschlossen. Die Weiterverarbeitung kann dann wie üblich durch Brühen, Kochen, Räuchern, Reifen usw. erfolgen.

Teil der vorliegenden Erfindung ist demgemäß auch die Verwendung der erfindungsgemäßen Hülle als künstliche Wursthülle, insbesondere für Roh-, Brüh- oder Kochwurst, oder als Umhüllung für Käse.

Die nachfolgenden Beispiele dienen der Illustration der Erfindung. Prozente sind Gewichtsprozente, soweit nicht anders angegeben oder aus dem Zusammenhang ersichtlich.

### Beispiel 1

Ein Faservlies aus Hanffasern mit einem Gewicht von 19 g/m² wurde zu einem Schlauch mit einem Durchmesser von 40 mm mit überlappenden Längskanten geformt (= Kaliber 40). Der Schlauch wurde dann auf der Außenseite mit Hilfe eines ringförmigen Antragsystems mit der folgenden Mischung beschichtet:

| | |
|---|---|
| 50,0 kg | Wasser |
| 5,0 kg | feingemahlene Kreide |
| 30,0 kg | Gelatine |
| 1,0 kg | epoxidiertes Leinöl (®Edenol B316 Spezial von Henkel KGaA) |
| 1,5 kg | CMC (Carboxymethylcellulose-Na-Salz) |
| 3,0 l | Isopropanol |

Nach dem Beschichten wurde der Schlauch in aufgeblasenem Zustand mit Heißluft getrocknet, dann flachgelegt und aufgewickelt. Das Gewicht der Beschichtung wurde danach mit 60 g/m² bestimmt. Die Hülle ließ sich problemlos raffen und auf einer automatischen Füllvorrichtung mit Brät füllen.

Eine mit Salami-Brät gefüllte Hülle zeigte innerhalb von 10 Tagen einen Gewichtsverlust von etwa 20 %.

### Beispiel 2

Ein Textilgewebe aus einem Baumwolle/Polyester-Gemisch mit einem Gewicht von 102 g/m² wurde zu einem Schlauch mit einem Durchmesser von 60 mm mit überlappenden Längskanten geformt und auf der Außenseite mit einem ringförmigen Rakel beschichtet mit einer Gemisch aus

| | |
|---|---|
| 75,0 kg | Wasser |
| 7,5 kg | Cellulose (pulverförmig) |
| 45,0 kg | Gelatine |
| 0,7 kg | Glyoxal |
| 1,5 kg | ®Edenol B316 Spezial |
| 2,25 kg | CMC (Carboxymethylcellulose-Na-Salz) und |
| 4,5 l | Isopropanol. |

Die beschichtete Hülle wurde im aufgeblasenen Zustand mit Heißluft getrocknet, anschließend flachgelegt und aufgerollt. Nach dem Trocknen betrug das Gewicht der Beschichtung 80 g/m².

### Beispiel 3

Ein flächenförmiges Trägermaterial aus einem Baumwoll/Polyester-Gemisch mit einem Gewicht von 58 g/m² wurde zu einem Schlauch mit einem Durchmesser von 40 mm mit überlappenden Längskanten geformt (= Kaliber 40) und von außen mit einer Mischung aus

| | |
|---|---|
| 30,0 kg | DAC (Desamidokollagen) |
| 3,0 kg | Cellulose (pulverförmig) |
| 5,0 kg | Glycerin und |
| 1,0 kg | ®Edenol B 316 Spezial. |

beschichtet und wie im Beispiel 1 beschrieben getrocknet. Die Hülle hatte danach ein Gewicht von 150 g/m² und ein Füllkaliber von 60 mm. Sie wurde dann mit Leberwurst-Brät gefüllt. Beim Füllen wurde eine Dehnung von 5 % ermittelt.

### Beispiel 4

Ein Faservlies aus Hanffasern mit einem Gewicht von 21 g/m² wurde zu einem Schlauch mit einem Durchmesser von 40 mm mit überlappenden Längskanten geformt (= Kaliber 40). Der Schlauch wurde dann auf der Außenseite mit Hilfe eines ringförmigen Antragsystems mit der folgenden Mischung beschichtet:

| | |
|---|---|
| 50,0 kg | Wasser |
| 5,0 kg | feingemahlene Weizenkleie (max. 200 µm) |
| 30,0 kg | Gelatine |
| 0,5 kg | Glyoxal |
| 1,0 kg | ®Edenol B 316 Spezial |
| 1,5 kg | CMC (Carboxymethylcellulose-Na-Salz) und |
| 3,0 l | Isopropanol. |

und wie im Beispiel 1 beschrieben getrocknet. Anschließend wurde hierauf Butylacrylat als weitere Schicht aufgetragen und getrocknet. Die erhaltene Hülle wurde mit Leberwurst-Brät gefüllt. Der Gewichtsverlust lag bei 5 %.

### Beispiel 5

Ein Textilgewebe aus einem Baumwolle/Polyester-Gemisch mit einem Gewicht von 102 g/m² wurde zu einem Schlauch mit einem Durchmesser von 75 mm mit überlappenden Längskanten geformt und auf der Außenseite mit einem ringförmigen Rakel beschichtet mit einer Gemisch aus

| | |
|---|---|
| 50,0 kg | Wasser |
| 5,0 kg | feingemahlene Kreide |
| 30,0 kg | Gelatine |
| 0,5 kg | Glyoxal |
| 1,0 kg | ®Edenol B 316 Spezial |
| 1,5 kg | CMC (Carboxymethylcellulose-Na-Salz) und |
| 3,0 l | Isopropanol. |

und wie im Beispiel 1 beschrieben getrocknet. Anschließend wurde hierauf eine weitere Schicht mit folgender Zusammensetzung aufgetragen:

| | |
|---|---|
| 69,0 kg | Wasser |
| 1,8 kg | Glycerin |
| 4,5 kg | KPS-Wachs |
| 1,2 kg | einer 20 %igen wäßrigen Lösung von Isotridecyl-polyethylenglykol-ether (®Genapol X-080) |
| 43,5 kg | einer PVDC-Dispersion mit etwa 55 % Feststoffanteil (®Ixan 554) |

und der erhaltene Schlauch erneut getrocknet. Die Hülle wurde mit Leberwurst-Brät gefüllt. Der Gewichtsverlust betrug 2 %.

### Beispiel 6:

Ein Faservlies aus einem Baumwolle/Polyesterfaser-Gemisch mit einem Gewicht von 40 g/m² wurde durch Rakelantrag beschichtet mit einem Gemisch aus

| | |
|---|---|
| 30,0 kg | DAC (Desamidokollagen) |
| 3,0 kg | Cellulose (pulverförmig) |
| 5,0 kg | Glycerin und |
| 1,0 kg | ®Edenol B 316 Spezial. |

Nach dem Trocknen hatte das so beschichtete Faservlies ein Gewicht von 78 g/m². Das Faservlies wurde in Bahnen mit einer Breite von 152 mm geschnitten, die dann zu Schläuchen geformt wurden. Die überlappenden Längskanten wurden miteinander vernäht. Die auf diese Weise hergestellten Wursthüllen wurden mit Rohwurstbrät gefüllt. Sie hatten ein Füllkaliber von 48 mm.

## Patentansprüche

1. Schlauchförmige Nahrungsmittelhülle mit einer flächenförmigen Einlage, **dadurch gekennzeichnet, daß** die Einlage ein Fasermaterial oder eine poröse Folie ist und auf mindestens einer Seite eine Beschichtung auf Basis von Proteinen aufweist, bei denen es sich um Gelatine, Kollagen oder Desamidokollagen handelt und von denen wenigstens eines filmbildend ist, wobei das Protein der Beschichtung mit einem anorganischen oder organischen Füllstoff oder Kollagenfasern mit einer Länge von 0,1 bis 4,0 cm abgemischt ist, wobei die Beschichtung auf Basis von Proteinen die flächenförmige Einlage durchdringt und wobei sie keine regenerierte oder gefällte Cellulose enthält.

2. Nahrungsmittelhülle gemäß Anspruch 1, **dadurch gekennzeichnet, daß** das Fasermaterial ein verfestigtes Vlies oder Spinnvlies, ein Gewebe, Gewirke, Gestricke oder Gelege ist.

3. Nahrungsmittelhülle gemäß Anspruch 1 oder 2, **dadurch gekennzeichnet, daß** das Fasermaterial imprägniert ist.

4. Nahrungsmittelhülle gemäß einem oder mehreren der Ansprüche 1 bis 3, **dadurch gekennzeichnet, daß** das Fasermaterial aus Natur- und/oder Kunstfasern besteht, bevorzugt aus Baumwolle, Regenerat-Cellulose, Seide, Polyester, Polyamid, Polyolefin, Polyvinylacetat, Polyacrylnitril, Polyvinylchlorid, einem entsprechenden Copolymer oder einem Gemisch davon.

5. Nahrungsmittelhülle gemäß einem oder mehreren der Ansprüche 1 bis 4, **dadurch gekennzeichnet, daß** die flächenförmige Einlage ein Gewicht von 3 bis 400 g/m², bevorzugt 10 bis 130 g/m², besonders bevorzugt 12 bis 75 g/m², aufweist.

6. Nahrungsmittelhülle gemäß einem oder mehreren der Ansprüche 1 bis 5, **dadurch gekennzeichnet, daß** der Anteil an Protein 2,5 bis 95 Gew.-%, bevorzugt 20 bis 80 Gew.-%, besonders bevorzugt 30 bis 75 Gew.-%, jeweils bezogen auf das Gesamtbeschichtungsgewicht der Hülle.

7. Nahrungsmittelhülle gemäß einem oder mehreren der Ansprüche 1 bis 6, **dadurch gekennzeichnet, daß** die Beschichtung neben mindestens einem Protein mindestens ein weiteres natürliches und/oder synthetisches Polymer enthält.

8. Nahrungsmittelhülle gemäß Anspruch 7, **dadurch gekennzeichnet, daß** das weitere natürliche oder synthetische Polymer ein Polyacrylat, Polyvinylacetat und/oder ein (Co)Polymer mit Einheiten aus Vinylacetat und/oder aus Einheiten von verseiftem Vinylacetat (Vinylalkohol) ist.

9. Nahrungsmittelhülle gemäß einem oder mehreren der Ansprüche 1 bis 8, **dadurch gekennzeichnet, daß** das weitere natürliche oder synthetische Polymer als primärer Weichmacher wirkt.

10. Nahrungsmittelhülle gemäß Anspruch 9, **dadurch gekennzeichnet, daß** das weitere natürliche oder synthetische Polymer ein Alginat, ein Polyvinylpyrrolidon, ein quartäres Vinylpyrrolidon-Copolymer, ein Copolymer mit Einheiten aus Vinylpyrrrolidon, Maleinsäureanhydrid oder Methylvinylether oder ein verzweigtes Polysaccharid ist.

11. Nahrungsmittelhülle gemäß Anspruch 7, **dadurch gekennzeichnet**, das der Anteil des mindestens einen weiteren natürlichen und/oder synthetischen Polymers bis zu 50 Gew.-%, bevorzugt 5 bis 40 Gew.-%, besonders bevorzugt 6 bis 25 Gew.-%, beträgt, jeweils bezogen auf das Trockengewicht der Hülle.

12. Nahrungsmittelhülle gemäß einem oder mehreren der Ansprüche 1 bis 9, **dadurch gekennzeichnet, daß** sie mindestens eine Verbindung enthält, die das Protein vernetzt und dadurch dessen Wasserlöslichkeit vermindert oder aufhebt.

13. Nahrungsmittelhülle gemäß Anspruch 12, **dadurch gekennzeichnet, daß** der Vernetzer epoxidiertes Leinöl, ein Diketen mit mit (C₁₀ - C₁₈)Alkyl-resten, Caramel, Tannin, ein Diepoxid, Citral, ein Aziridin, Glyoxal, Glutardialdehyd und/oder ein Polyamin-Polyamid-Epichlorhydrinharz ist.

14. Nahrungsmittelhülle gemäß einem oder mehreren der Ansprüche 1 bis 13, **dadurch gekennzeichnet, daß** sie Farbstoffe und/oder Pigmente enthält.

15. Nahrungsmittelhülle gemäß Anspruch 14, **dadurch gekennzeichnet, daß** der Anteil der Farbstoffe und/oder Pigmente 0,5 bis 12,0 Gew.-%, bevorzugt 1,0 bis 6,0 Gew.-%, beträgt, jeweils bezogen auf das Trockengewicht der Hülle.

16. Nahrungsmittelhülle gemäß einem oder mehreren der Ansprüche 1 bis 15, **dadurch gekennzeichnet, daß** sie zusätzlich mindestens ein weitere Schicht aufweist, die kein Protein enthält.

17. Nahrungsmittelhülle gemäß einem oder mehreren der Ansprüche 1 bis 16, **dadurch gekennzeichnet, daß** die weitere Schicht eine Schicht auf Basis von Polyacrylat, Polyvinylacetat (PVA), Polyvinylpyrrolidon, Polyvinylidenchlorid (PVDC), Polyvinylchlorid (PVC), Polyvinylalkohol (PVOH), Synthesekautschuk, Latex, Silikon oder einer beliebigen Mischung davon ist.

18. Nahrungsmittelhülle gemäß einem oder mehreren der Ansprüche 1 bis 17, **dadurch gekennzeichnet, daß** sie innen und/oder außen imprägniert ist, bevorzugt mit Mitteln, die zur Einstellung der Bräthaftung oder zur Verbesserung der Schimmelresistenz dienen, und/oder Mitteln, die übertragbaren Farb-, Aroma-, Geruchs- und/oder Geschmacksstoffe umfassen.

19. Nahrungsmittelhülle gemäß einem oder mehreren der Ansprüche 1 bis 18, **dadurch gekennzeichnet, daß** sie eine Längsnaht aufweist, bevorzugt eine Klebe-, Siegel- oder Schweißnaht oder eine genähte Naht.

20. Verfahren zur Herstellung der Nahrungsmittelhülle gemäß einem oder mehreren der Ansprüche 1 bis 19, **dadurch gekennzeichnet, daß**
a) ein flächenförmiges Fasermaterial oder eine poröse Folie mit einer vorbestimmten Breite zu einem Schlauch geformt, der Schlauch zur Aufrechterhaltung seiner Form mit Stützluft beaufschlagt oder mit Kaliberstützringen in seiner runden Form gehalten und von innen und/oder von außen nahtlos mit der proteinhaltigen Beschichtung versehen wird oder
b) das ein- oder beidseitig mit der proteinhaltigen Beschichtung versehene Fasermaterial oder die poröse Folie gegebenenfalls auf passende Breite geschnitten und zu einem Schlauch geformt wird, dessen überlappende Längskanten fest miteinander verbunden werden, bevorzugt durch Nähen, Kleben, Siegeln oder Verschweißen.

21. Verwendung der Nahrungsmittelhülle gemäß einem oder mehreren der Ansprüche 1 bis 19 als künstliche Wursthülle, bevorzugt für Roh-, Brüh-oder Kochwurst, oder als Käsehülle.

22. Verwendung der Wursthülle gemäß Anspruch 21, **dadurch gekennzeichnet, daß** sie in geraffter Form als sogenannte Raffraupe oder in Form von Einzelabschnitten eingesetzt wird, wobei die Einzelabschnitte an einem Ende durch einen Metall- oder Kunststoff-Clip, durch Abbinden mit Garn oder durch Abnähen verschlossen sind.

23. Nahrungsmittelhülle gemäß Anspruch 1, **dadurch gekennzeichnet, daß** der anorganische Füllstoff Kreide, Kalksteinmehl, Calcit, gefälltes Calciumcarbonat, Magnesiumcarbonat, Bariumcarbonat oder Dolomit ist, der organische Füllstoff feingemahlenes Cellulosepulver, Weizenkleie, native oder/und thermoplastische Stärke bzw. Stärkederivate, pflanzliches Pulver oder/und Fasern aus Baumwolle, Kapok, Flachs, Leinen, Hanf, Jute, Kenaf, Ramie, Sisal, Torf, Stroh, Weizen, Kartoffeln, Tomaten, Karotten, Kokos, Ananas, Äpfeln, Orangen, Fichte, Kiefer oder Kork.

## Claims

1. A tubular food casing having a flat-shaped insert, wherein the insert is a fibrous material or a porous film and, on at least one side, has a protein-based coating, which is gelatin, collagen or desamido collagen and of which at least one is film-forming, wherein the protein of the coating is mixed with an inorganic or organic filler or collagen fibers having a length from 0.1 to 4.0 cm, wherein the protein-based coating penetrates the flat-shaped insert, and wherein it does not contain regenerated or precipitated cellulose.

2. The food casing as claimed in claim 1, wherein the fiber material is a consolidated nonwoven or spunbonded fabric, a woven fabric, loop-formingly knitted fabric, loop-drawingly knitted fabric or laid fabric.

3. The food casing as claimed in claim 1 or 2, wherein the fiber material is impregnated.

4. The food casing as claimed in one or more of claims 1 to 3, wherein the fiber material comprises natural and/or artificial fibers, preferably cotton, regenerated cellulose, silk, polyester, polyamide, polyolefin, polyvinyl acetate, polyacrylonitrile, polyvinyl chloride, a corresponding copolymer or a mixture thereof.

5. The food casing as claimed in one or more of claims 1 to 4, wherein the flat-shaped insert has a weight of 3 to 400 g/m², preferably 10 to 130 g/m², particularly preferably 12 to 75 g/m².

6. The food casing as claimed in one or more of claims 1 to 5, the fraction of protein is 2.5 to 95 % by weight, preferably 20 to 80 % by weight, particularly preferably 30 to 75 % by weight, in each case based on the total coating weight of the casing.

7. The food casing as claimed in one or more of claims 1 to 6, wherein the coating, in addition to at least one protein, comprises at least one further natural and/or synthetic polymer.

8. The food casing as claimed in claim 7, wherein the further natural or synthetic polymer is a polyacrylate, polyvinyl acetate and/or a (co)polymer having units of vinyl acetate and/or units of saponified vinyl acetate (vinyl alcohol).

9. The food casing as claimed in one or more of claims 1 to 8, wherein the further natural or synthetic polymer acts as a primary plasticizer.

10. The food casing as claimed in claim 9, wherein the further natural or synthetic polymer is an alginate, a polyvinylpyrrolidone, a quaternary vinylpyrrolidone copolymer, a copolymer having units of vinylpyrrolidone, maleic anhydride or methyl vinyl ether or a branched polysaccharide.

11. The food casing as claimed in claim 7, wherein the fraction of the at least one further natural and/or synthetic polymer is up to 50 % by weight, preferably 5 to 40 % by weight, particularly preferably 6 to 25 % by weight, in each case based on the dry weight of the casing.

12. The food casing as claimed in one or more of claims 1 to 9, wherein the food casing comprises at least one compound which crosslinks the protein and thereby decreases or cancels its water solubility.

13. The food casing as claimed in claim 12, wherein the crosslinker is epoxidized linseed oil, a diketene having (C₁₀-C₁₈) alkyl radicals, caramel, tannin, a diepoxide, citral, an aziridine, glyoxal, glutardialdehyde and/or a polyamine-polyamide-epichlorohydrin resin.

14. The food casing as claimed in one or more of claims 1 to 13, wherein the food casing comprises dyes and/or pigments.

15. The food casing as claimed in claim 14, wherein the fraction of dyes and/or pigments is 0.5 to 12.0 % by weight, preferably 1.0 to 6.0 % by weight, in each case based on the dry weight of the casing.

16. The food casing as claimed in one or more of claims 1 to 15, wherein the food casing additionally has at least one further casing which does not comprise protein.

17. The food casing as claimed in one or more of claims 1 to 16, wherein the further layer is a layer based on polyacrylate, polyvinyl acetate (PVA), polyvinylpyrrolidone, polyvinylidene chloride (PVDC), polyvinyl chloride (PVC), polyvinyl alcohol (PVOH), synthetic rubber, latex, silicone or any mixture thereof.

18. The food casing as claimed in one or more of claims 1 to 17, wherein the food casing is internally and/or externally impregnated, preferably with agents which serve to set the sausage emulsion adhesion or for improving the mold resistance, and/or agents which comprise transferrable dyes, aroma substances, odor substances and/or flavor substances.

19. The food casing as claimed in one or more of claims 1 to 18, wherein the food casing has one longitudinal seam, preferably a glued, sealed, or welded seam, or a sewed seam.

20. A method for producing the food casing as claimed in one or more of claims 1 to 19, which comprises
a) forming a flat-shaped fiber material or a porous film having a predetermined width into a tube, charging the tube with supporting air to maintain its shape or holding it in its round shape by caliber support rings and providing it internally and/or externally seamlessly with the protein-containing coating or
b) cutting the fiber material or the porous film provided on one or both sides with the protein-containing coating if appropriate to appropriate width and forming it to a tube, bonding its overlapping longitudinal edges firmly to one another, preferably by sewing, gluing, sealing or welding.

21. The use of the food casing as claimed in one or more of claims 1 to 19 as artificial sausage casing, preferably for raw meat sausage, scalded-emulsion sausage, or cooked-meat sausage, or as cheese casing.

22. The use of the sausage casing as claimed in claim 21, which is used in shirred form as what is termed a shirred stick or in the form of individual sections, the individual sections being closed at one end by a metal or plastic clip, by tying with yarn or by sewing.

23. The food casing as claimed in claim 1, wherein the inorganic filler is chalk, limestone flour, calcite, precipitated calcium carbonate, magnesium carbonate, barium carbonate or dolomite, the organic filler is finely ground cellulose powder, wheat bran, native and/or thermoplastic starch or starch derivatives, plant powder and/or fibers from cotton, kapok, flax, linen, hemp, jute, kenaf, ramie, sisal, peat, straw, wheat, potatoes, tomatoes, carrots, coconut, pineapple, apples, oranges, spruce, pine or cork.

## Revendications

1. Enveloppe pour denrées alimentaires en forme de tuyau, avec une nappe plane, **caractérisée en ce que** la nappe est un matériau fibreux ou une feuille poreuse et présente sur au moins un côté un revêtement à base de protéines, s'agissant pour ces dernières de gélatine, de collagène ou de désamido-collagène et dont au moins une est filmogène, la protéine du revêtement étant mélangée avec une matière de charge inorganique ou organique ou des fibres de collagène d'une longueur de 0,1 à 4,0 cm, le revêtement à base de protéines pénétrant dans la nappe plane et ne contenant pas de cellulose régénérée ou précipitée.

2. Enveloppe pour denrées alimentaires selon la revendication 1, **caractérisée en ce que** le matériau fibreux est un non-tissé ou filé-lié renforcé, un tissu, un tissu à mailles, un tricot ou un tulle.

3. Enveloppe pour denrées alimentaires selon la revendication 1 ou 2, **caractérisée en ce que** le matériau fibreux est imprégné.

4. Enveloppe pour denrées alimentaires selon une ou plusieurs des revendications 1 à 3, **caractérisée en ce que** le matériau fibreux se compose de fibres naturelles et/ou synthétiques, de préférence en coton, cellulose régénérée, soie, polyester, polyamide, polyoléfine, acétate de polyvinyle, polyacrylonitrile, polychlorure de vinyle, un copolymère correspondant ou un mélange de ceux-ci.

5. Enveloppe pour denrées alimentaires selon une ou plusieurs des revendications 1 à 4, **caractérisée en ce que** la nappe plane présente un poids de 3 à 400 g/m², de préférence de 10 à 130 g/m², de façon particulièrement préférée de 12 à 75 g/m².

6. Enveloppe pour denrées alimentaires selon une ou plusieurs des revendications 1 à 5, **caractérisée en ce que** la proportion de protéine est de 2,5 à 95 %-poids, de préférence de 20 à 80 %-poids, de façon particulièrement préférée de 30 à 75 %-poids, respectivement rapportée au poids de revêtement total de l'enveloppe.

7. Enveloppe pour denrées alimentaires selon une ou plusieurs des revendications 1 à 6, **caractérisée en ce que** le revêtement contient, à côté d'au moins une protéine, au moins un autre polymère naturel et/ou synthétique.

8. Enveloppe pour denrées alimentaires selon la revendication 7, **caractérisée en ce que** l'autre polymère naturel ou synthétique est un polyacrylate, un acétate de polyvinyle et/ou un (co)polymère avec des motifs d'acétate de vinyle et/ou des motifs d'acétate de vinyle saponifié (alcool vinylique).

9. Enveloppe pour denrées alimentaires selon une ou plusieurs des revendications 1 à 8, **caractérisée en ce que** l'autre polymère naturel ou synthétique agit en tant que plastifiant primaire.

10. Enveloppe pour denrées alimentaires selon la revendication 9, **caractérisée en ce que** l'autre polymère naturel ou synthétique est un alginate, un pyrrolidone de polyvinyle, un copolymère de vinylpyrrolidone quaternaire, un copolymère avec des motifs de vinylpyrrolidone, d'anhydride maléique ou de méthylvinyléther ou un polysaccharide ramifié.

11. Enveloppe pour denrées alimentaires selon la revendication 7, **caractérisée en ce que** la proportion de l'autre polymère naturel et/ou synthétique au moins au nombre de un va jusqu'à 50 %-poids, de préférence 5 à 40 %-poids, de façon particulièrement préférée 6 à 25 %-poids, respectivement rapportée au poids à sec de l'enveloppe.

12. Enveloppe pour denrées alimentaires selon une ou plusieurs des revendications 1 à 9, **caractérisée en ce qu'**elle contient au moins un composé qui réticule la protéine et qui réduit ainsi sa solubilité dans l'eau ou la supprime.

13. Enveloppe pour denrées alimentaires selon la revendication 12, **caractérisée en ce que** l'agent de réticulation est de l'huile de lin époxydée, un dicétène avec des radicaux alkyle (C₁₀ - C₁₈), du caramel, du tanin, un diépoxyde, du citral, une aziridine, du glyoxal, de la glutardialdéhyde et/ou une résine polyamine-polyamide-épichlorhydrine.

14. Enveloppe pour denrées alimentaires selon une ou plusieurs des revendications 1 à 13, **caractérisée en ce qu'**elle contient des colorants et/ou des pigments.

15. Enveloppe pour denrées alimentaires selon la revendication 14, **caractérisée en ce que** la proportion des colorants et/ou des pigments est de 0,5 à 12,0 %-poids, de préférence de 1,0 à 6,0 %-poids, respectivement rapportée au poids à sec de l'enveloppe.

16. Enveloppe pour denrées alimentaires selon une ou plusieurs des revendications 1 à 15, **caractérisée en ce qu'**elle présente de plus au moins une autre couche qui ne contient pas de protéines.

17. Enveloppe pour denrées alimentaires selon une ou plusieurs des revendications 1 à 16, **caractérisée en ce que** l'autre couche est une couche à base de polyacrylate, d'acétate de polyvinyle (PVA), de polyvinylpyrrolidone, de polychlorure de vinylidène (PVDC), de polychlorure de vinyle (PVC), d'alcool polyvinylique (PVOH), de caoutchouc synthétique, de latex, de silicone ou d'un mélange de ceux-ci.

18. Enveloppe pour denrées alimentaires selon une ou plusieurs des revendications 1 à 17, **caractérisée en ce qu'**elle est imprégnée intérieurement et/ou extérieurement, de préférence avec des agents qui servent à régler l'adhérence de la chair à saucisse ou à améliorer la résistance à la moisissure, et/ou avec des agents qui comprennent des colorants, des agents aromatiques, odorants et/ou des agents de sapidité transférables.

19. Enveloppe pour denrées alimentaires selon une ou plusieurs des revendications 1 à 18, **caractérisée en ce qu'**elle présente un joint longitudinal, de préférence un joint collé, scellé ou soudé ou un joint cousu.

20. Procédé de fabrication de l'enveloppe pour denrées alimentaires selon une ou plusieurs des revendications 1 à 19, **caractérisée en ce que**
a) un matériau fibreux plan ou une feuille poreuse d'une largeur prédéfinie est formé(e) en un tuyau, le tuyau est alimenté en air de soutien pour conserver sa forme ou bien sa forme ronde est maintenue avec des bagues de soutien de calibrage, et il est muni sans joint de l'intérieur et/ou de l'extérieur du revêtement contenant des protéines, ou
b) le matériau fibreux ou la feuille poreuse muni(e) d'un côté ou des deux côtés du revêtement contenant des protéines est éventuellement coupé(e) à la largeur qui convient et formé(e) en un tuyau dont les arêtes longitudinales se chevauchant sont raccordées fermement l'une à l'autre, de préférence par couture, collage, scellement ou soudage.

21. Utilisation de l'enveloppe pour denrées alimentaires selon une ou plusieurs des revendications 1 à 19 en tant qu'enveloppe artificielle de saucisse, de préférence pour de la saucisse crue, à bouillir ou à cuire, ou en tant qu'enveloppe de fromage.

22. Utilisation de l'enveloppe de saucisse selon la revendication 21, **caractérisée en ce qu'**elle est utilisée sous forme froncée en tant que ce qu'on appelle un boyau contracté ou sous forme de tronçons individuels, les tronçons individuels étant obturés à une extrémité par un clip en métal ou en matière plastique, par ligature avec du fil ou par couture.

23. Enveloppe pour denrées alimentaires selon la revendication 1, **caractérisée en ce que** le matériau de charge inorganique est de la craie, de la chaux en poudre, de la calcite, du carbonate de calcium précipité, du carbonate de magnésium, du carbonate de baryum ou de la dolomite, **en ce que** le matériau de charge organique est de la poudre de cellulose finement moulue, du son de blé, de l'amidon natif et/ou thermoplastique ou respectivement des dérivés d'amidon, de la poudre végétale ou/et des fibres de coton, de kapok, de lin, de filasse de lin, de chanvre, de jute, de kénaf, de ramie, de sisal, de tourbe, de paille, de blé, de pommes de terre, de tomates, de carottes, de coco, d'ananas, de pommes, d'oranges, d'épicéa, de pin ou de liège.
